Europäisches Patentamt

European Patent Office

Office européen des brevets

(19)

(11) Numéro de publication: **0 124 036**
**A2**

(12) # DEMANDE DE BREVET EUROPEEN

(21) Numéro de dépôt: **84104443.1**

(22) Date de dépôt: **19.04.84**

(51) Int. Cl.³: **G 01 K 17/06**, G 01 K 17/16

---

(30) Priorité: **25.04.83 FR 8306722**

(43) Date de publication de la demande: **07.11.84**
**Bulletin 84/45**

(84) Etats contractants désignés: **AT BE CH DE FR LI NL SE**

(71) Demandeur: **BLANZY-OUEST Société Anonyme dite:,
73, Bd. Haussmann, F-75008 Paris (FR)**

(72) Inventeur: **Quinton, Jacques, 42, rue Charles Infroit,
F-78570 Andresy (FR)**

(74) Mandataire: **Weinmiller, Jürgen et al, Zeppelinstrasse 63,
D-8000 München 80 (DE)**

---

(54) **Système centralisé d'acquisition de données individuelles concernant la consommation.**

(57)    La présente invention est relative à un système centralisé d'acquisition de données réalisé à partir d'un compteur de quantités de chaleur avec son calculateur centralisé à microprocesseur (5) et ses sondes thermoélectriques (10) qui sont réparties sur les radiateurs individuelles de chauffage alimentées par une source d'énergie thermique commune et qui sont interrogées à distance par le calculateur centralisé (5) par l'intermédiaire de circuits d'interrogation locaux (11). Elle a pour objet l'adjonction à ce compteur de quantités de chaleur de têtes d'acquisition d'un signal de comptage (10') placées sur les compteurs de consommation équipant les locaux des installations et raccordées au calculateur centralisé (5) par des circuits d'interrogation (11) identiques à ceux des sondes thermo-électriques (10). Cette adjonction permet de profiter des éléments du compteur de quantités de chaleur pour effectuer des relevés à distance de consommations diverses telles que l'eau, le gaz, l'électricité.

EP 0 124 036 A2

Système centralisé d'acquisition de données individuelles concernant la consommation

La présente invention est relative à l'acquisition de données individuelles concernant la consommation.

On connaît par la demande de brevet français FR-A-2.420.126 un compteur de quantités de chaleur avec son calculateur à microprocesseur centralisé et des sondes thermo-électriques réparties sur les radiateurs de plusieurs installations individuelles de chauffage alimentés par une source d'énergie thermique commune qui présente l'avantage, outre celui de permettre une répartition équitable des frais de chauffage, de procéder à des relevés à distance des consommations de quantités de chaleur sans nécessiter de visites périodiques des locaux de chaque installation. A l'heure actuelle, ce mode de relèvement à distance devient d'un intérêt grandissant, cela pour de multiples raisons, notamment le coût croissant des visites de relèvement de consommation et la gêne engendrée par ces visites pour les occupants des locaux.

Le présente invention a pour but de profiter d'un compteur de chaleur pour effectuer également à distance des relevés d'autres consommations telles que celles d'eau froide, d'eau chaude, de gaz ou d'électricité.

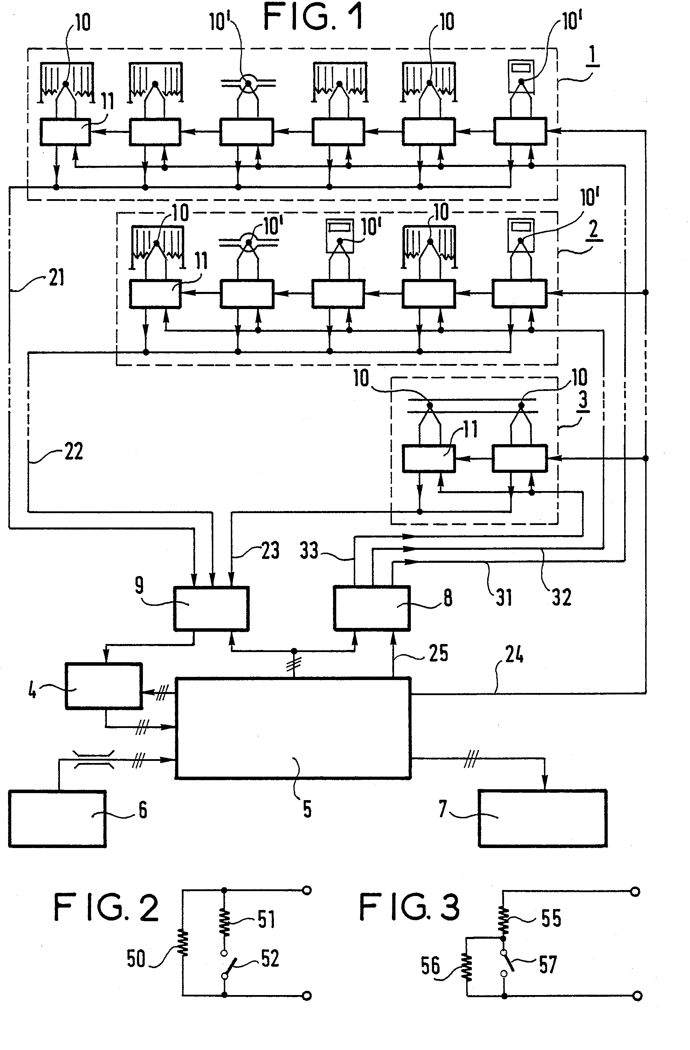

Elle a pour objet un système centralisé d'acquisition de données individuelles concernant la consommation, comportant plusieurs têtes d'acquisition, qui fournissent chacune un signal analogique, qui est significatif de la température de l'eau dans un radiateur ou de la température de l'eau chaude prise d'un robinet, et qui disposent chacune d'un bistable d'adressage, et comportant un microprocesseur, qui interroge cycliquement toutes les têtes d'acquisition en activant leur bistable et en enregistrant, après conversion dans un convertisseur analogique/numérique le signal fourni par la tête activée, caractérisé par le fait que des signaux numériques provenant d'un compteur d'eau, de gaz ou de l'électricité sont transformés dans un dipole résistif commutable (figure 2, figure 3) en une impédance présentant l'une des deux valeurs d'impédance selon le niveau du signal à acquérir.

Selon un mode préféré de réalisation chaque tête de comptage comporte deux résistances connectées entre ses deux bornes, l'une directement, l'autre par l'intermédiaire d'un contact dont l'état ouvert ou fermé dépend d'un signal de comptage.

Selon une variante, chaque tête de comptage comporte deux résistances connectées en série entre ses bornes et un contact qui est placé en parallèle sur l'une des résistances et dont l'état ouvert ou fermé dépend d'un signal de comptage.

D'autres caractéristiques et avantages de l'invention ressortiront des revendications jointes et de la description ci-après d'un mode de réalisation donné à titre d'exemple. Cette description sera faite en regard du dessin dans lequel :

- la figure 1 représente un schéma électrique général d'un compteur de quantités de chaleur selon l'invention

- et les figures 2 et 3 des schémas électriques d'une tête d'acquisition d'un signal de comptage.

Le système centralisé d'acquisition de données comporte :

- des groupes de mesure décentralisés 1, 2, 3 réunissant des sondes thermo-électriques 10 placées sur des corps de chauffe ou des conduites du fluide chauffant, des têtes d'acquisition d'un signal de comptage 10' placées sur des compteurs d'eau chaude ou froide, de gaz ou d'électricité et leurs circuits d'interrogation 11 tous identiques,

- et des moyens centralisés de traitement de l'information comportant un convertisseur analogique-numérique 4, un microprocesseur 5 avec son clavier de programmation 6 et son circuit d'affichage 7 desservant les groupes de mesure 1, 2, 3 par l'intermédiaire d'un multiplexeur 8 et d'un démultiplexeur 9.

Les groupes de mesure 1 et 2 réunissent toutes les sondes thermo-électriques d'une installation individuelle de chauffage ainsi que toutes les têtes d'acquisition d'un signal de comptage 10' placées dans les locaux de ladite installation. Le groupe 1 rassemble quatre sondes thermo-électriques 10 placées sur quatre radiateurs et deux têtes d'acquisition d'un signal de comptage 10' placées sur un compteur d'eau et un compteur électrique. Le groupe 2 rassemble deux sondes thermo-électriques 10 placées sur deux radiateurs et trois têtes de comptage disposées sur un compteur d'eau, un compteur de gaz et un compteur d'électricité. Il peut évidemment y avoir d'autres groupes de mesure analogues aux groupes 1 et 2 avec des nombres de sondes thermo-électriques et de têtes de comptage adaptés à chaque fois à l'installation de chauffage et au nombre de compteurs rencontrés. Le groupe de mesure 3 dit "commun" comporte deux sondes thermo-électriques 10 placées sur la tuyauterie de la source commune d'énergie thermique.

Les circuits d'interrogation 11 auxquels sont reliées les sondes thermo-électriques 10 ou les têtes d'acquisition d'un signal de comptage 10' sont tous identiques. Des exemples en ont été donnés dans le brevet principal et sa première addition. Ils comportent chacun un étage de registre à décalage qui autorise en fonction de l'état de sa sortie la scrutation ou non de la sonde thermo-électrique 10 ou de la tête d'acquisition d'un signal de comptage 10' associée par des moyens centralisés de traitement opérant par l'intermédiaire d'une ligne de mesure 21, 22 ou 23 affectée à son groupe de mesure. Les étages de registre à décalage des circuits d'interrogation 11 appartenant à un même groupe de mesure sont mis en chaîne et forment un registre à décalage à entrée série et sorties parallèles. L'entrée donnée du premier étage dans la chaîne est connectée à la sortie 24 du microprocesseur 5 et celle d'un autre étage est connectée à la sortie de l'étage qui le précède dans la chaîne. Les entrées de cadencement des étages de registre à décalage des circuits d'interrogation 11 appartenant à un même groupe de mesure sont connectées en parallèle sur une ligne d'horloge 31, 32 ou 33 aboutissant à une sortie du multiplexeur 8 qui, adressé par le microprocesseur 5, met en relation l'une de ses sorties avec une sortie 25 du microprocesseur 5 sur laquelle est disponible un signal d'horloge.

Les lignes de mesure 21, 22, 23 en provenance des groupes de mesure 1, 2 ou 3 aboutissent aux entrées d'un démultiplexeur 9 qui est adressé par le microprocesseur 5 et dont la sortie aboutit au convertisseur analogique-numérique 4.

Chaque sonde thermo-électrique 10 et chaque tête d'acquisition d'un signal de comptage 10' se comportent électriquement comme un dipôle résistif et sont placées dans un pont résistif mis sous tension pour permettre leur scrutation, par la sortie de l'étage du registre à décalage du circuit d'interrogation 11 associé. Par convention, on désignera dans la suite par 1 l'état de sortie du registre à décalage correspondant

- 4 -                                    0124036

à cette mise sous-tension et par 0 l'état inverse.

Au repos, c'est-à-dire en dehors des périodes de scrutation des sondes et des têtes d'acquisition d'un groupe de mesure 1, 2 ou 3, les étages de registre à décalage des circuits d'interrogation 11 de ce groupe de mesure ne reçoivent aucun signal d'horloge et ont tous leur sortie à l'état 0.

En période de scrutation des sondes et des têtes d'acquisition d'un groupe de mesure 1, 2 ou 3 les étages de registre à décalage des circuits d'interrogation 11 de ce groupe de mesure reçoivent tous un signal d'horloge mais seul l'un d'entre eux a sa sortie à l'état 1, cet état progressant d'étage en étage au rythme du signal d'horloge.

La commande de scrutation des sondes et des têtes d'acquisition d'un groupe de mesure 1, 2 ou 3 par le microprocesseur 5 s'effectue de la manière suivante :

Le microprocesseur 5 adresse le démultiplexeur 9 de manière à relier l'entrée du convertisseur analogique-numérique 4 à la ligne de mesure 21, 22 ou 23 affectée au groupe de mesure considéré 1, 2 ou 3. Il engendre sur sa sortie 25 un signal d'horloge qu'il oriente grâce au multiplexeur 8 sur la ligne d'horloge 31, 32 ou 33 du groupe de mesure considéré 1, 2 ou 3. Il émet enfin sur sa sortie 24 un signal de départ qui est constitué d'une impulsion recouvrant une période du signal d'horloge et qui permet de faire passer à l'état 1 la sortie de l'étage de registre à décalage du circuit d'interrogation placé en tête du groupe de mesure considéré. Par la suite le signal d'horloge fait progresser cet état 1 le long de la chaîne des sorties des registres à décalage des circuits d'interrogation du groupe de mesure considéré.

Le microprocesseur 5 effectue des cycles de mesure de manière séquentielle sur tous les groupes de mesures à une cadence suffisamment rapide pour saisir toutes les impulsions de comptage captées par les têtes d'acquisition. Dans le cas par exemple où les têtes d'acquisition équipent des compteurs d'eau, d'électricité ou de gaz délivrant des signaux de comptage ayant des périodes minimales de l'ordre de quatre à cinq minutes, les cycles de mesure du microprocesseur peuvent se répéter avec une périodicité de l'ordre de trente secondes.

Le microprocesseur 5 identifie la nature du capteur scruté par l'ordre de grandeur de la valeur de sa résistance interne, les têtes d'acquisition d'un signal de comptage pouvant prendre chacune deux valeurs de résistance interne choisies dans des gammes différentes selon le type de comptage effectué, en dehors de la plage des valeurs de résistance des sondes thermo-électriques.

A partir de l'échantillonnage régulier de la résistance d'une sonde thermo-électrique il apprécie la quantitée de chaleur consommée par la mise en oeuvre d'une relation de la forme :

$$Q = \int Po\ (T - 20)^{1 + N}\ dt$$

dans laquelle :

Po est la puissance émise par le radiateur équipé de la sonde considérée pour un écart de 30° entre la température du radiateur et la température ambiante,

N est un exposant permettant de tenir compte des variations de la puissance calorique émise par un radiateur en fonction de l'écart entre la température du radiateur et la température ambiante. Il est compris entre 0,2 et 0,4 et dépend de la nature du radiateur et de son installation,

T est la température moyenne du radiateur appréciée par l'intermédiaire de la sonde thermo-électrique.

A partir de l'échantillonnage régulier des têtes d'acquisition, il reconstruit les différents signaux de comptage et les utilise pour incrémenter des comptes particuliers de consommation.

Pour ce faire, le microprocesseur est programmé pour réaliser à chaque scrutation d'un capteur :

- la gestion du convertisseur analogique-numérique lui délivrant une valeur numérique représentative de la résistance interne du capteur,
- une discrimination entre les types de capteur : sonde thermo-électrique ou tête d'acquisition d'un signal de comptage d'un type déterminé en fonction de l'ordre de grandeur de la résistance trouvée,
- dans le cas d'une résistance de sonde thermo-électrique d'un groupe de mesure 1 ou 2 :
    - détermination de la valeur de la fonction $(T - 20)^{1 + N}$ grâce à une table de conversion inscrite dans une mémoire interne,

- multiplication de la valeur obtenue par le facteur de puissance Po propre au radiateur où est placée la sonde échantillonnée, facteur qui est également inscrit dans une mémoire interne,
- sommation de la valeur obtenue dans une position mémoire qui est commune pour les valeurs obtenues à partir des scrutations des sondes thermo-électriques appartenant à un même groupe de mesure,
- dans le cas d'une résistance de sonde thermo-électrique du groupe de mesure 3
  - comparaison de la valeur de la résistance obtenue avec un seuil correspondant par exemple à une température de 30° qui, si elle n'est pas obtenue, provoque l'arrêt du comptage des quantités de chaleur. Il faut en effet arrêter ce comptage lorsque les installations individuelles de chauffage ne sont plus alimentées comme par exemple pendant l'été,
- dans le cas d'une résistance d'une tête d'acquisition d'un signal de comptage
  - discrimination du type de comptage par la plage de valeur de la résistance et du niveau 0 ou 1 du signal de comptage par la valeur de la résistance elle même,
  - et détection des transitions de 0 à 1 ou inversement du signal de comptage et comptage de ces dernières dans une position mémoire spécifique au type de comptage et au groupe de mesure.

Le programme du microprocesseur 5 peut être complété par des tests de vérification de l'installation : test d'isolement pendant lequel le microprocesseur sélectionne un groupe de mesure sans lui délivrer un signal de départ, test de bon fonctionnement des compteurs sur lesquels sont placées les têtes d'acquisition consistant à vérifier qu'un minimum de transitions du signal de comptage a été détecté au cours d'un intervalle de temps donné......., par des opérations de sauvegarde en cas de panne d'un ou plusieurs capteurs, une hypothèse étant faite sur une consommation moyenne.

Le microprocesseur 5 est également utilisé pour la gestion d'un clavier 6 et d'un affichage 7 servant à l'inscription des caractéristiques du réseau de mesure et à la commande de l'affichage des diverses consommations.

La configuration exacte des interconnections entre le microprocesseur 5 et ses périphériques n'est pas détaillée car elle fait partie de la technique courante.

La figure 2 représente le schéma électrique d'une tête d'acquisition d'un signal de comptage. Celle-ci se présente sous la forme d'un dipôle ayant deux résistances connectées entre ses bornes l'une 50 directement et l'autre 51 par l'intermédiaire d'un contact 52.

La figure 3 une variante du schéma électrique d'une tête d'acquisition d'un signal de comptage. Cette dernière se présente toujours sous la forme d'un dipôle résistif mais ses deux résistances 55 et 56 sont montées en série entre ses bornes et le contact 57 en parallèle sur l'une d'elles 56.

Le contact 52 ou 57 est placé sur le compteur d'eau, de gaz ou d'électricité équipé de la tête d'acquisition et actionné par exemple par un index porté par une roue du compteur, ou par attraction magnétique d'une partie aimantée de cette roue. Les deux bornes du dipôle électrique sont quant à elles connectées à un circuit d'interrogation de la même manière que celles d'une sonde thermo-électrique.

On peut, sans sortir du cadre de l'invention modifier certaines dispositions ou remplacer certains moyens par des moyens équivalents. on peut notamment utiliser pour actionner le contact des têtes d'acquisition tout dispositif conçu pour détecter la rotation d'une roue.

REVENDICATIONS

1/ Système centralisé d'acquisition de données individuelles concernant la consommation, comportant plusieurs têtes d'acquisition, qui fournissent chacune un signal analogique, qui est significatif de la température de l'eau dans un radiateur ou de la température de l'eau chaude prise d'un robinet, et qui disposent chacune d'un bistable d'adressage, et comportant un microprocesseur, qui interroge cycliquement toutes les têtes d'acquisition en activant leur bistable et en enregistrant, après conversion dans un convertisseur analogique/numérique le signal fourni par la tête activée, caractérisé par le fait que des signaux numériques provenant d'un compteur d'eau, de gaz ou de l'électricité sont transformés dans un dipole résistif commutable (figure 2, figure 3) en une impédance présentant l'une de deux valeurs d'impédance selon le niveau du signal à acquérir.

2/ Système centralisé d'acquisition de données selon la revendication 1, caractérisé en ce qu'une tête d'acquisition d'un signal de comptage (10') a des valeurs de résistance interne figurant en dehors de la plage des valeurs de résistance des sondes thermo-électriques (10) et en ce que cette caractéristique sert de critère au système centralisé à microprocesseur (5) pour identifier la nature du capteur scruté.

3/ Système centralisé d'acquisition de données selon la revendication 1, caractérisé en ce que les têtes d'acquisition d'un signal de comptage (10') ont des valeurs de résistance interne choisies dans des gammes différentes en fonction du type de comptage effectué, en dehors de la plage des valeurs de résistance des sondes thermo-électriques (10) et en ce que cette caractéristique sert de critère au système centralisé à microprocesseur (5) pour identifier la nature du capteur scruté.

4/ Système centralisé d'acquisition de données selon la revendication 1, caractérisé en ce qu'une tête d'acquisition d'un signal de comptage (10') est constituée d'un dipôle électrique résistif comportant deux résistances connectées à ses bornes l'une (50) directement l'autre (51) par l'intermédiaire d'un contact (52) dont l'état est fonction du niveau du signal de comptage.

5/ Système centralisé d'acquisition de données selon la revendication 1, caractérisé en ce qu'une tête d'acquisition d'un signal de comptage (10)

0124036

est constituée d'un dipôle électrique résistif comportant deux résistances (55, 56) montées en série entre ses bornes et un contact (57) qui est placé en parallèle sur l'une d'elles (56) et dont l'état est fonction du niveau du signal de comptage.

1/1

FIG. 1

FIG. 2

FIG. 3

0124036